# FASCICULE DE BREVET EUROPEEN

(11) **EP 0 399 879 B1**
(45) Date de publication et mention de la délivrance du brevet: **03.02.1993**
(21) Numéro de dépôt: 90401321.6
(22) Date de dépôt: 18.05.1990
(51) Int. Cl.: F01D 9/04, F01D 5/30

(54) **Distributeur de turbine pour turbo-réacteur et son procédé de fabrication**
Leitschaufelzusammenbau für Strahltriebwerk und Verfahren zu dessen Herstellung
Stator assembly for turbojet and its method of manufacture

(30) Priorité: 23.05.1989 FR 8906748
(43) Date de publication de la demande: 28.11.1990
(73) Titulaire: SOCIETE EUROPEENNE DE PROPULSION, 92150 Suresnes (FR)
(72) Inventeur: Fouillot, Jacques G., F-33270 Florac (FR); Letanter, Gérard, F-13800 Istres (FR)
(74) Mandataire: Joly, Jean-Jacques

(56) Documents cités:
- EP-A- 0 172 082
- FR-A- 389 268
- FR-A- 896 203
- GB-A- 828 248
- GB-A- 1 096 257
- US-A- 3 042 366
- US-A- 3 357 082
- US-A- 3 677 663
- US-A- 4 643 636

## Description

La présente invention se rapporte à un distributeur de turbine pour turbo-réacteur.

Dans un turbo-réacteur, le premier distributeur de turbine, placé immédiatement en sortie de la chambre de combustion, comprend un ensemble d'aubes fixes définissant des passages ou canaux juxtaposés qui canalisent l'écoulement des gaz entre la chambre de combustion et le rotor de turbine.

La disposition d'un turbo-réacteur fait que l'énergie récupérée par le rotor de turbine est transmise au compresseur, en amont de la chambre de combustion, par un arbre central qui traverse le distributeur de turbine. Celui-ci doit donc être fixé au carter du turbo-réacteur par sa périphérie.

Les distributeurs de turbine connus sont réalisés en métal ou en céramique frittée, ce qui limite leurs performances.

Un distributeur de turbine en céramique est décrit dans US-A- 4 643 636.

L'utilisation de matériaux composites réfractaires, en particulier de matériaux composites à matrice céramique (CMC), doit permettre un accroissement de performances en raison de la capacité de ces matériaux à supporter des températures très élevées tout en conservant leur tenue mécanique.

Or, si les distributeurs de turbine métalliques ou en céramique frittée peuvent être réalisés par moulage, il ne peut pas en être de même avec un CMC.

Aussi, la présente invention a-t-elle pour but de fournir un procédé de fabrication qui soit particulièrement adapté à la réalisation d'un distributeur de turbine en CMC.

Ce but est atteint grâce à un procédé comprenant les étapes qui consistent à :
- réaliser un moyeu portant des aubes à sa périphérie, chaque aube présentant un tenon ou doigt qui fait saillie radialement à son extrémité extérieure,
- réaliser deux bagues dentées portant des dents orientées en direction axiale, les dentures des deux bagues s'étendant sur des circonférences ayant un même diamètre légèrement supérieur à celui du moyeu à aubes, tenons non compris.
- rapprocher l'une vers l'autre les deux bagues dentées avec leur denture se faisant face, de part et d'autre du moyeu à aubes, pour immobiliser chaque tenon d'une aube axialement et circonférentiellement entre un flanc d'une dent d'une bague et un flanc d'une dent de l'autre bague, et
- maintenir les bagues dentées appliquées l'une vers l'autre en direction axiale.

Chacune des dents bloquant un tenon est réalisée avec un premier flanc qui vient en portée contre une surface correspondante du tenon et un deuxième flanc qui vient en portée contre un deuxième flanc correspondant d'une dent de l'autre bague.

Les deuxièmes flancs des dents forment des rampes inclinées par rapport à la direction axiale. Ainsi, dans le cas d'une dilatation d'origine thermique du moyeu à aubes supérieure à celle des bagues dentées, la dilatation des tenons, qui tend à écarter les unes des autres les dents entre lesquelles ils sont logés, se traduit, grâce aux rampes formées par les deuxièmes flancs des dents, par une rotation relative entre les bagues et un écartement mutuel de celles-ci en direction axiale. Le maintien des bagues appliquées l'une vers l'autre en direction axiale est donc avantageusement assuré par des moyens élastiques qui autorisent, le cas échéant, un tel écartement mutuel, tout en rappelant les bagues dentées en permanence l'une vers l'autre. La fixation du distributeur au carter du turbo-réacteur est réalisée par une liaison mécanique entre le carter et l'une des deux bagues, ce qui permet un mouvement de rotation relative entre les deux bagues sous l'effet de la dilatation des tenons des aubes.

En direction radiale, les bagues dentées n'exercent aucun blocage sur les tenons, ce qui laisse libre la dilatation dans cette direction. L'intervalle entre les bagues dentées peut être obturé radialement par une pièce annulaire ménageant un jeu avec les extrémités des tenons.

L'invention a aussi pour objet un distributeur de turbine en CMC pour turbo-réacteur du type de celui obtenu par le procédé défini ci-dessus.

L'invention sera mieux comprise à la lecture de la description faite ci-après, à titre indicatif mais non limitatif, en référence aux dessins annexés sur lesquels :
- la figure 1 est une vue schématique de face d'un distributeur de turbine en CMC réalisé conformément à l'invention,
- la figure 2 est une vue en coupe suivant le plan diamétral II-II de la figure 1,
- la figure 3 est une vue en perspective partielle éclatée illustrant l'assemblage du distributeur de la figure 1,
- la figure 4 est une vue partielle développée en plan montrant l'immobilisation d'un tenon d'une aube entre deux dents des bagues dentées du distributeur de la figure 1,
- la figure 5 est une vue analogue à celle de la figure 4, montrant le mouvement relatif entre les bagues dentées dû à une dilatation du tenon, et
- la figure 6 est une vue partielle en coupe axiale du distributeur de la figure 1, illustrant le montage du distributeur dans le carter d'un turbo-réacteur.

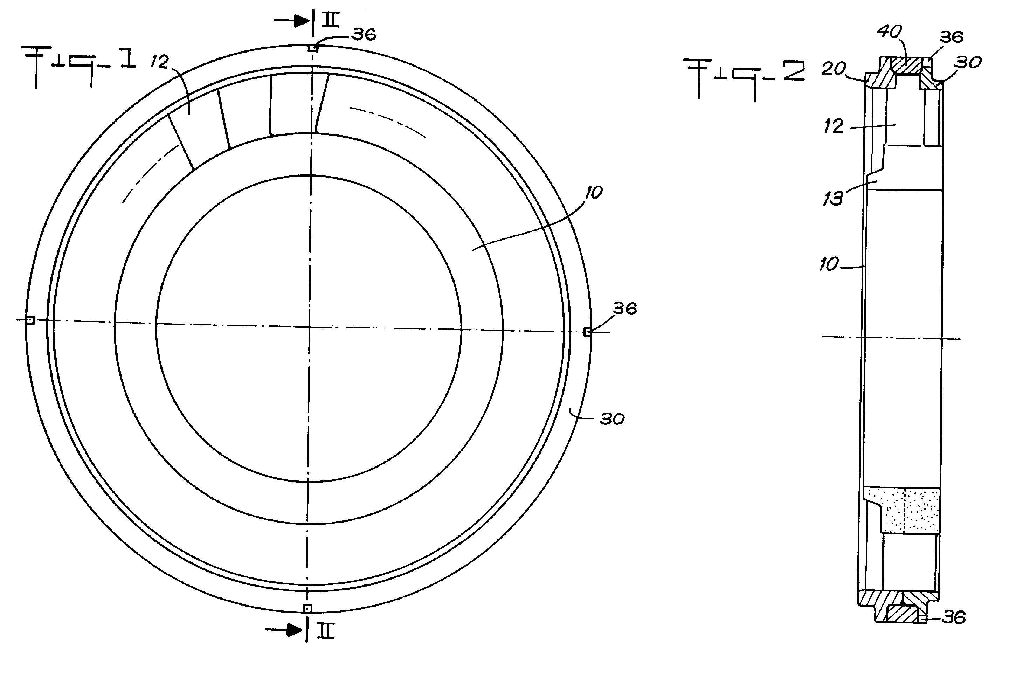

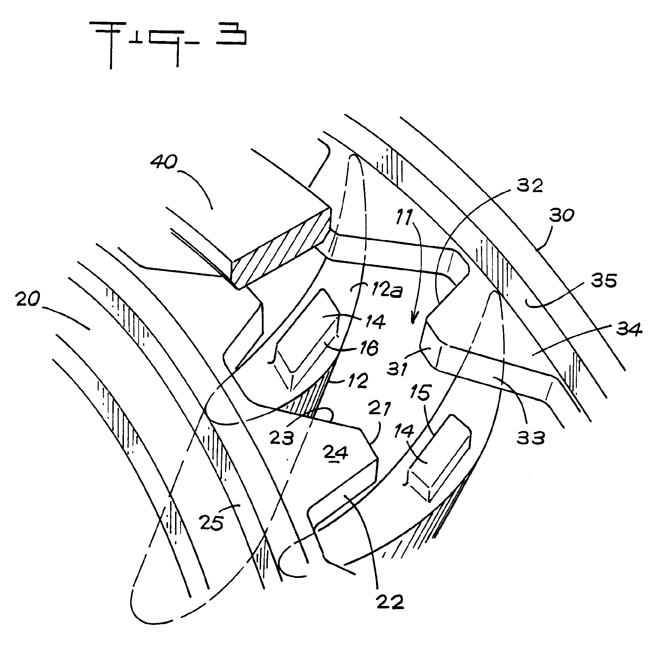

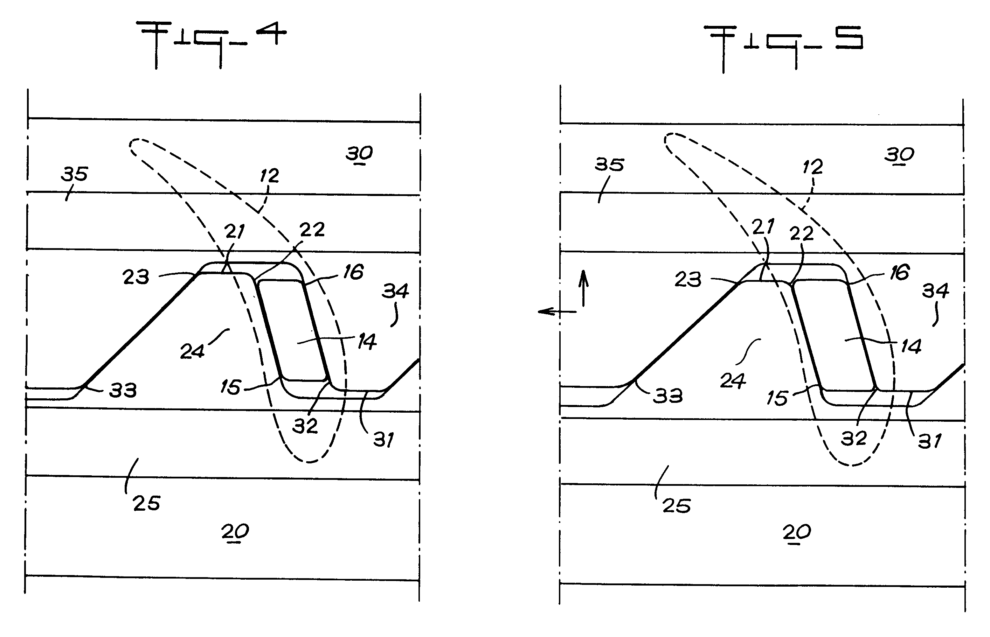

Comme le montrent notamment les figures 1 à 3, un distributeur de turbine en CMC pour turbo-réacteur est réalisé conformément à l'invention par assemblage d'un moyeu à aubes 10, de deux bagues dentées 20, 30 et d'un anneau 40 interposé entre les deux bagues.

Le moyeu à aubes 10 est réalisé en une seule pièce en CMC et comprend une pluralité d'aubes 12 réparties régulièrement autour d'une partie centrale 13 formant moyeu. Les aubes 12 définissent entre elles des passages ou canaux 11 destinés à canaliser l'écoulement des gaz entre la chambre de combustion et le rotor de turbine du turbo-réacteur. Un tenon ou doigt 14 fait saillie radialement à la surface d'extrémité extérieure 12a de chaque aube, dans la partie centrale de cette surface.

Chacune des bagues dentées 20,30 est réalisée en une seule pièce en CMC. Les bagues 20, 30 portent des dents, respectivement 21, 31, orientées en direction axiale et se faisant face. Les dentures des bagues 20, 30 sont analogues et sont disposées suivant un même diamètre légèrement supérieur au diamètre extérieur du moyeu à aubes 10, tenons non compris. De la sorte, les bagues 20 et 30 peuvent être rapprochées l'une de l'autre, à partir des côtés opposés du moyeu à aubes, en passant à l'extérieur des surfaces terminales 15 des aubes 12 et en ménageant un jeu radial avec celles-ci. Le nombre et la disposition des dents 21, 31 sont choisis pour que chaque tenon 14 d'une aube soit immobilisé axialement et circonférentiellement entre un flanc 22 d'une dent 21 et un flanc 32 d'une dent 31 lorsque les deux bagues 20, 30 sont appliquées l'une vers l'autre. Dans l'exemple illustré, les dents 21, 31 sont réparties régulièrement le long des bagues 20, 30 et sont en nombre égal à celui des aubes 12 ; en outre, l'épaisseur des dents 21, 31 et la hauteur des tenons 14 sont choisies telles que les tenons ne font pas saillie radialement au-delà des surfaces cylindriques extérieures 24, 34 des dentures des bagues 20, 30.

L'anneau 40 est réalisé en une seule pièce en CMC. Il est disposé entre les bagues 20, 30, à l'extérieur des dents 21, 31, pour fermer radialement l'intervalle entre les bagues 20, 30. Le diamètre intérieur de l'anneau 40 est tel qu'il ménage un jeu radial au moins avec les extrémités des tenons 14 et, éventuellement, avec les surfaces 24, 34. En direction axiale, l'anneau 40 est logé entre deux rebords annulaires extérieurs 25, 35 des bagues 20, 30.

Le CMC constitutif des pièces 10, 20, 30, 40 est un matériau comprenant un renfort fibreux en fibres réfractaires, par exemple des fibres en carbone ou en céramique telle que le carbure de silicium ou l'alumine, et une matrice céramique, par exemple également du carbure de silicium ou de l'alumine.

Chacune des pièces 10, 20, 30, 40 peut être obtenue en réalisant d'abord une préforme cylindrique, par exemple par bobinage d'une texture fibreuse, telle qu'un tissu, constituant le renfort fibreux, puis en densifiant celui-ci par infiltration du matériau céramique constitutif de la matrice. La densification peut être réalisée par infiltration chimique en phase vapeur, éventuellement après dépôt d'un matériau d'interphase entre les fibres du renfort et la matrice. Des procédés d'élaboration de CMC sont bien connus, de sorte qu'une description plus détaillée n'est pas nécessaire.

On pourra se référer notamment au brevet européen EP 0 172 082. Après densification, chaque pièce est usinée à sa forme définitive, notamment pour former les aubes du moyeu à aubes 10, et les dentures des bagues 20, 30.

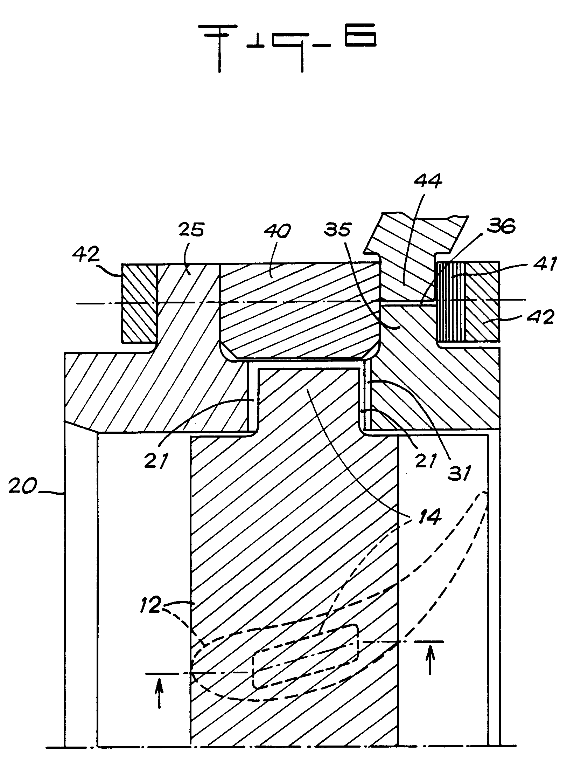

Comme le montrent plus particulièrement les figures 4 et 5, chaque tenon 14 a deux faces opposées 15, 16 qui sont en portée contre les flancs 22, 32 de deux dents 21, 31 entre lesquelles le tenon est immobilisé. Les dentures des bagues 20, 30 sont en contact mutuel par les autres flancs 23, 33 des dents 21, 31.

Les flancs 22, 32 entre lesquels les tenons 14 sont immobilisés sont inclinés d'un angle a non nul par rapport à la direction axiale, de sorte que chaque tenon est immobilisé à la fois axialement et circonférentiellement. Il est souhaitable que les tenons 14 soient en portée sur les flancs 22, 32 sur la plus grande surface possible. En pratique, les tenons 14 peuvent être réalisés avec leur plus grande face orientée sensiblement comme les faces des aubes 12, comme cela ressort de la figure 4 où une aube 12 est montrée en tirets. La valeur de l'angle a est donc pratiquement imposée par la disposition des aubes 12. Cette valeur est comprise entre 0 et 30°, par exemple environ 15°.

Lorsque, au cours de l'utilisation du distributeur, il se produit une dilatation différentielle entre les tenons 14 et les dents 21, 31 due à un échauffement plus important des aubes 12 par rapport aux bagues 20, 30, la dilatation supérieure de chaque tenon 14 fait qu'il tend à écarter l'une de l'autre les dents 21, 31 entre lesquelles il est immobilisé. Les flancs 23, 33 des dents en contact mutuel forment des rampes inclinées d'un angle b par rapport à la direction axiale de sorte que la dilatation des tenons se traduit par une rotation relative avec écartement mutuel des bagues 20, 30, comme montré de façon amplifiée par la figure 5. L'angle b d'inclinaison des flancs 23, 33 est choisi pour favoriser un tel glissement relatif. Il est compris de préférence entre 30 et 60°, par exemple égal à 45°.

En direction radiale, le jeu entre les tenons 14 et l'anneau 40 autorise librement la dilatation des tenons.

Le montage du distributeur dans le carter du turbo-réacteur doit être réalisé de manière à maintenir le distributeur fixe par rapport au carter tout en autorisant un mouvement relatif de faible amplitude à la fois en rotation et en direction axiale entre les bagues 20 et 30.

A cet effet, comme montré par la figure 6, le maintien des bagues 20 et 30 appliquées l'une vers l'autre est assuré par bride 42 enserrant les bagues 20, 30 avec interposition d'un anneau 41 élastiquement déformable au moins en direction axiale tout en supportant un cisaillement d'amplitude limitée. L'anneau 41 est avantageusement constitué par un joint graphite en feuillets orientés radialement. Les bagues 20, 30 sont ainsi en permanence sollicitées élastiquement l'une vers l'autre en direction axiale.

La liaison mécanique du distributeur avec le carter du turbo-réacteur est assurée au moyen de pions 44 solidaires du carter, qui pénètrent dans des encoches 36 formées à égale distance les unes des autres à la périphérique de la bague 30 (figures 1, 2 et 6). Les encoches 36 sont par exemple au nombre de quatre.

## Revendications

1. Procédé de fabrication d'un distributeur de turbine en matériau composite à matrice céramique, caractérisé en ce qu'il comprend les étapes qui consistent à :
- réaliser un moyeu portant des aubes (12) à sa périphérie, chaque aube présentant un tenon (14) ou doigt qui fait saillie radialement à son extrémité extérieure,
- réaliser deux bagues dentées (20, 30) portant des dents (21, 31) orientées en direction axiale, les dentures des deux bagues s'étendant sur des circonférences ayant un même diamètre légèrement supérieur à celui du moyeu à aubes, tenons non compris.
- rapprocher l'une vers l'autre les deux bagues dentées (20, 30) avec leur denture se faisant face, de part et d'autre du moyeu à aubes (10), pour immobiliser chaque tenon (14) d'une aube (12) axialement et circonférentiellement entre un flanc (22) d'une dent (21) d'une bague (20) et un flanc (32) d'une dent (31) de l'autre bague (30), et
- maintenir les bagues dentées (20, 30) appliquées l'une vers l'autre en direction axiale.

2. Procédé selon la revendication 1, caractérisé en ce que les bagues dentées (20, 30) sont réalisées et appliquées l'une vers l'autre, de sorte que chaque dent (21, 31) d'une bague (20, 30) bloquant un tenon (14) a un premier flanc (22, 32) en contact avec une surface (15, 16) du tenon et un deuxième flanc (23, 33) en contact avec un deuxième flanc correspondant (33, 23) d'une dent de l'autre bague (30, 20), les deuxièmes flancs des dents formant des rampes inclinées par rapport à la direction axiale.

3. Procédé selon la revendication 2, caractérisé en ce que le maintien des bagues (20, 30) appliquées l'une vers l'autre est réalisé de manière à permettre un mouvement relatif en rotation et axialement entre les bagues.

4. Procédé selon l'une quelconque des revendications 1 à 3, caractérisé en ce qu'un anneau (40) est interposé entre les bagues dentées (20, 30), à l'extérieur des dents (21, 31), pour fermer radialement l'intervalle entre les bagues dentées (20, 30) tout en ménageant un jeu avec les extrémités des tenons (14) des aubes (12).

5. Procédé selon l'une quelconque des revendications 1 à 4, caractérisé en ce que chacun des éléments constitués par le moyeu à aubes (10) et les bagues dentées (20, 30) est réalisé en une seule pièce en matériau composite à matrice céramique.

6. Distributeur de turbine, pour turbo-réacteur, caractérisé en ce qu'il est réalisé en matériau composite à matrice céramique et comprend :
- un moyeu portant des aubes (12) à sa périphérie, chaque aube présentant un tenon (14) ou doigt qui fait saillie radialement à son extrémité extérieure,
- deux bagues dentées (20, 30), portant des dents (21, 31), orientées en direction axiale, les dentures des deux bagues se faisant face et s'étendant sur des circonférences ayant un même diamètre légèrement supérieur à celui du moyeu à aubes, tenons non compris, les bagues dentées étant appliquées l'une vers l'autre en direction axiale, de sorte que chaque tenon (14) est immobilisé axialement et circonférentiellement entre un flanc (22) d'une dent (21) d'une bague (20) et un flanc (32) d'une dent (31) de l'autre bague (30).

7. Distributeur selon la revendication 6, caractérisé en ce que chaque dent (21, 31) d'une bague dentée (20, 30) bloquant un tenon (14) a un premier flanc (22, 32) en portée contre une surface correspondante (15, 16) du tenon (14), et un deuxième flanc (23, 33) en portée contre un deuxième flanc correspondant (33, 23) d'une dent (31, 21) de l'autre bague dentée (30, 20).

8. Distributeur selon la revendication 7, caractérisé en ce que les deuxièmes flancs (23, 33) des dents (21, 31) forment des rampes inclinées par rapport à la direction axiale.

9. Distributeur selon la revendication 8, caractérisé en ce que les bagues dentées (20, 30) sont maintenues appliquées l'une vers l'autre par des moyens élastiques (41).

10. Distributeur selon l'une quelconque des revendications 6 à 9, caractérisé en ce qu'il comprend en outre un anneau (40) disposé entre les bagues dentées (20, 30), à l'extérieur des dents, un jeu étant ménagé entre ledit anneau (40) et les extrémités des tenons (14).

11. Distributeur selon l'une quelconque des revendications 6 à 10, caractérisé en ce que des moyens (36) sont prévus sur l'une des deux bagues dentées pour réaliser une liaison mécanique avec un carter du turbo-réacteur.

## Patentansprüche

1. Verfahren zur Herstellung einer Leitschaufel aus Verbundwerkstoff mit einer Keramikmatrize, dadurch gekennzeichnet, daß es folgende Phasen aufweist, während derer:
- ein Kern hergestellt wird, der an seinem äußeren Umfang Schaufeln aufweist (12), wobei jede Schaufel mit einem Zapfen (14) oder Finger versehen ist, der radial an ihrem äußeren Ende heraussteht,
- zwei Zahnringe (20, 30) hergestellt werden, die axial ausgerichtete Zähne (21, 31) aufweisen, wobei sich die Zahnungen der beiden Ringe um einen Umfang gleichen Durchmessers erstrecken, der geringfügig über dem Durchmesser des Leitschaufelkerns ohne Zapfen liegt,
- beide Zahnringe (20, 30) einander angenähert werden, wobei ihre Zahnungen diesseits und jenseits des Leitschaufelkerns (10) ineinanderfassen, um jeden Zapfen (14) einer Schaufel (12) sowohl axial als auch in seinem Umfang zwischen einer Seite (22) eines Zahns (21) eines Rings (20) und einer Seite (32) eines Zahns (31) des anderen Rings (30) festzuklemmen,
- die Zahnringe (20, 30) in Axialrichtung gegeneinandergedrückt gehalten werden.

2. Verfahren gemäß Anspruch 1, dadurch gekennzeichnet, daß die Zahnringe (20, 30) so ausgeführt und gegeneinander gedrückt werden, daß jeder Zahn (21, 31) eines Rings (20, 30) einen Zapfen (14) an einer ersten Seite (22, 32), die Kontakt mit einer Fläche (15, 16) des Zapfens hat, sowie an einer zweiten Seite (23, 33), die Kontakt mit einer zweiten entsprechenden Seite (33, 23) eines Zahns des anderen Rings (30, 20) hat, festklemmt, wobei die zweiten Zahnseiten zur Achse hin geneigte Flächen bilden.

3. Verfahren gemäß Anspruch 2, dadurch gekennzeichnet, daß die Ringe (20, 30) in gegeneinandergedrückter Position so gehalten werden, daß zwischen den Ringen eine relative Dreh- und Axialbewegung möglich ist.

4. Verfahren gemäß einem der Ansprüche 1 bis 3, dadurch gekennzeichnet, daß ein Ring (40) zwischen die beiden Zahnringe (20, 30) außerhalb der Zähne (21, 31) gesetzt wird, um den Zwischenraum zwischen den Zahnringen (20, 30) radial zu schließen, wobei zwischen diesem und den Enden der Zapfen (14) der Schaufeln (12) ein Spiel besteht.

5. Verfahren gemäß einem der Ansprüche 1 bis 4, dadurch gekennzeichnet, daß jedes der vom Schaufelkern (10) und den Zahnringen (20, 30) gebildete Element aus Verbundwerkstoff aus einem Stück mit einer Keramikmatrize gefertigt wird.

6. Leitschaufel für ein Turboluftstrahl- bzw. TL-Triebwerk, dadurch gekennzeichnet, daß sie aus einem Verbundwerkstoff mit Keramikmatrize hergestellt wird und folgende Teile umfaßt:
- einen Kern mit Schaufeln (12) an seinem äußeren Umfang, wobei jede Schaufel mit einem Zapfen (14) oder Finger versehen ist, der radial an ihrem äußeren Ende heraussteht,
- zwei Zahnringe (20, 30), die axial ausgerichtete Zähne (21, 31) aufweisen, wobei sich die Zahnungen der beiden Ringe gegenüberliegen und um einen Umfang gleichen Durchmessers erstrecken, der geringfügig über dem Durchmesser des Leitschaufelkerns ohne Zapfen liegt, und die Zahnringe werden in Achsrichtung und vom Umfang her zwischen einer Seite (22) eines Zahns (21) eines Rings (20) und einer Seite (32) eines Zahns (31) des anderen Rings (30) gegeneinandergedrückt.

7. Leitschaufel gemäß Anspruch 6, dadurch gekennzeichnet, daß jeder Zahn (21, 31) eines Zahnrings (20, 30) einen Zapfen (14) an einer ersten Seite (22, 32) gegen eine entsprechende Seite (15, 16) des Zapfens (14) und eine zweite Seite (23, 33) gegen eine zweite entsprechende Seite (33, 23) eines Zahns (31, 21) des anderen Zahnrings (30, 20) festklemmt.

8. Leitschaufel gemäß Anspruch 7, dadurch gekennzeichnet, daß die zweiten Seiten (23, 33) der Zähne (21, 31) zur Achsrichtung geneigte Flächen bilden.

9. Leitschaufel gemäß Anspruch 8, dadurch gekennzeichnet, daß die Zahnringe (20, 30) durch elastische Vorrichtungen (41) gegeneinandergedrückt gehalten werden.

10. Leitschaufel gemäß einem der Ansprüche 6 bis 9, dadurch gekennzeichnet, daß sie außerdem einen Ring (40) aufweist, der zwischen den Zahnringen (20, 30) außerhalb der Zähne vorgesehen wird, wobei zwischen dem besagten Ring (40) und den Enden der Zapfen (14) Spiel besteht.

11. Leitschaufel gemäß einem der Ansprüche 6 bis 10, dadurch gekennzeichnet, daß an einem der beiden Zahnringe Vorrichtungen (36) zur Herstellung einer mechanischen Verbindung mit einem Gehäuse des TL-Triebwerks vorgesehen sind.

## Claims

1. Method of manufacturing a turbine stator made of ceramic matrix composite material, characterized in that it comprises the following steps:
- making a bladed hub carrying blades (12) around its periphery, each blade having a finger or tenon (14) projecting radially from its outer end;
- making two toothed rings (20, 30) having axially directed teeth (21, 31), the teeth of the two rings extending around circumferences of the same diameter which is slightly greater than the diameter of the bladed hub, not including the tenons;
- bringing together the two toothed rings (20, 30) with their teeth facing each other on either side of the bladed hub (10) so as to hold each blade tenon (14) both axially and circumferentially between a flank (22) of a tooth (21) of one of the rings (20), and a flank (32) of a tooth (31) of the other ring (30); and
- keeping the toothed rings (20, 30) applied against each other in the axial direction.

2. Method according to claim 1, characterized in that the toothed rings (20, 30) are made and applied against each other in such a manner that each tenon-engaging ring tooth (21, 31) has a first flank (22, 32) in contact with a surface (15, 16) of the tenon and a second flank (23, 33) in contact with a corresponding second flank (33, 23) of a tooth on the other ring (30, 20), the second flanks of the teeth forming ramps that are inclined relative to the axial direction.

3. Method according to claim 2, characterized in that the rings (20, 30) are kept applied against each other in such a manner as to enable relative axial and rotary motion between the rings.

4. Method according to any one of claims 1 to 3, characterized in that an annular part (40) is interposed between the toothed rings (20, 30) outside the teeth (21, 31) in order to close the gap between the toothed rings (20, 30) radially while leaving clearance relative to the ends of the tenons (14) of the blades (12).

5. Method according to any one of claims 1 to 4, characterized in that each of the parts constituted by the bladed hub (10) and by the toothed rings (20, 30) is made as a single piece of ceramic matrix composite material.

6. Turbine stator for a turbojet, characterized in that the stator is made of ceramic matrix composite material and comprises:
- a bladed hub carrying blades (12) around its periphery, each blade having a finger or tenon (14) projecting radially from its outer end; and
- two toothed rings (20, 30) having teeth (21, 31) directed axially, the teeth of the two rings facing one another and extending around circumferences of the same diameter which is slightly greater than the diameter of the bladed hub, not including the tenons, the toothed rings being pressed towards each other in the axial direction in such a manner that each tenon (14) is held axially and circumferentially between a flank (22) of a tooth (21) of one of the rings (20) and a flank (32) of a tooth (31) of the other ring (30).

7. Stator according to claim 6, characterized in that each tenon-engaging tooth (21, 31) of a toothed ring (20, 30) has a first flank (22, 32) bearing against a corresponding surface (15, 16) of the tenon (14), and a second flank (23, 33) bearing against a corresponding second flank (33, 23) of a tooth (31, 21) of the other toothed ring (30, 20).

8. Stator according to claim 7, characterized in that the second flanks (23, 33) of the teeth (21, 31) form ramps inclined relative to the axial direction.

9. Stator according to claim 8, characterized in that the toothed rings (20, 30) are kept pressed towards each other by resilient means (41).

10. Stator according to any one of claims 6 to 9, characterized in that it further includes an annular part (40) disposed between the toothed rings (20, 30) outside the teeth, with clearance being left between said annular part (40) and the ends of the tenons (14).

11. Stator according to any one of claims 6 to 10, characterized in that means (36) are provided on one of the two toothed rings for providing a mechanical connection with a turbojet casing.
